(19) Europäisches Patentamt / European Patent Office / Office européen des brevets

(11) **EP 4 036 631 B1**

(12) **EUROPEAN PATENT SPECIFICATION**

(45) Date of publication and mention
of the grant of the patent:
**18.12.2024  Bulletin 2024/51**

(51) International Patent Classification (IPC):
*H04N 23/54* (2023.01)  *H04N 23/55* (2023.01)
*H04N 23/68* (2023.01)  *G02B 13/00* (2006.01)
*G02B 27/64* (2006.01)  *G02B 7/04* (2021.01)

(21) Application number: **21188825.0**

(22) Date of filing: **30.07.2021**

(52) Cooperative Patent Classification (CPC):
**G02B 27/646; G02B 7/04; G02B 13/0065;
H04N 23/54; H04N 23/55; H04N 23/6812;
H04N 23/687**

(54) **IMAGE ACQUISITION MODULE AND TERMINAL**

BILDERFASSUNGSMODUL UND ENDGERÄT

MODULE D'ACQUISITION D'IMAGE ET TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **29.01.2021  CN 202110124197**

(43) Date of publication of application:
**03.08.2022  Bulletin 2022/31**

(73) Proprietor: **Beijing Xiaomi Mobile Software Co.,
Ltd.
Beijing 100085 (CN)**

(72) Inventors:
• **CHEN, Chaoxi
Beijing, 100085 (CN)**

• **SUN, Changyu
Beijing, 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
**EP-A1- 3 674 768       WO-A1-2020/082411
US-A1- 2013 021 485    US-A1- 2019 349 523**

**Description**

**TECHNICAL FIELD**

The present disclosure relates to the technical field of terminal device, in particular to an image acquisition module and a terminal.

**BACKGROUND**

Periscope cameras have become a necessary configuration for mobile devices. A periscope camera deflects an incident light via a mirror, so that the lens of the periscope camera does not need to face the incident light directly. In the case where the periscope camera is applied to a terminal such as a mobile phone, the lens may be set parallel to the body of the terminal, thereby avoiding a situation that the lens protrudes from the body.

The periscope camera is capable of achieving large-magnification optical zoom. It may cooperate with the main camera and ultra-wide-angle matrix camera to achieve higher magnification optical zoom, providing an excellent experience for image shooting. Related technologies are known from patent publication documents US2013021485A1, WO2020082411A1, EP3674768A1 and US2019349523A1.

**SUMMARY**

The invention is defined by the independent claims. The present disclosure provides an image acquisition module and a terminal.

According to a first aspect of embodiments of the present disclosure, there is provided an image acquisition module, including:

a lens;
a first moving component, including: a first magnetic component fixedly arranged on the lens, and a first coil fixedly arranged on a housing of the image acquisition module, wherein the first coil generates a magnetic field when applied with a first driving signal, and drives the first magnetic component and the lens to move through the magnetic field;
a light transmission component, configured to transmit ambient light to the lens through at least one reflection; and
a second moving component, including: a second magnetic component fixedly arranged on the light transmission component, and a second coil fixedly arranged on the housing, wherein the second coil generates a magnetic field when applied with a second driving signal, and drives the second magnetic component and the light transmission component to move through the magnetic field.

In some embodiments, the image acquisition module further includes:
a movement control component, coupled to the first moving component and the second moving component, and configured to send the first driving signal to drive the first moving component to move the lens, and/or send the second driving signal to drive the second moving component to move the light transmission component.

In some embodiment, the image acquisition module further comprises: a first magnetic sensing component and/or a second magnetic sensing component, wherein:

the first magnetic sensing component is coupled to the movement control component, and is configured to sense a change value of the magnetic field of the first magnetic component, and send the sensed change value of the magnetic field of the first magnetic component to the movement control component;
the second magnetic sensing component is coupled to the movement control component, and is configured to sense a change value of the magnetic field of the second magnetic component, and send the sensed change value of the magnetic field of the second magnetic component to the movement control component; and
the movement control component is configured to determine a position change of the lens according to the received change value of the magnetic field of the first magnetic component, and/or configured to determine a position change of the light transmission component according to the received change value of the magnetic field of the second magnetic component.

In some embodiment, the image acquisition module further includes:

a motion detection unit, coupled to the movement control component and configured to detect a motion of the image acquisition module and output a motion detection signal; and

the movement control component is configured to calculate corresponding motion correction amount according to the motion detection signal, and adjust the first driving signal and/or the second driving signal based on the motion correction amount.

In some embodiment, the image acquisition module further includes:

an image sensing component, configured to form an image based on the ambient light acquired by the lens; and
an image processing component, coupled to the image sensing component and the movement control component, and configured to determine an image quality parameter of the image formed by the image sensing component, and adjust the first driving signal and/or the second driving signal of the movement control component based on the image quality parameter.

In some embodiments, the image quality parameter includes an image suppression ratio.
In some embodiments, the first coil and/or the second coil are wound with a twisted pair.
In some embodiments, there are two first moving components, and the two first moving components are distributed on both sides of the lens with an optical axis of the lens as a symmetry axis.
In some embodiments, there are three second moving components, and the three second moving components are located on a first side, a second side, and a third side of the light transmission component, respectively, and wherein the first side and the second side are distributed with an optical axis of the lens as a symmetry axis, and the third side is perpendicular to the optical axis.
In some embodiments, the first moving component is specifically configured to move the lens back and forth along the optical axis of the lens; and
the second moving component is specifically configured to rotate the light transmission component.
In some embodiment, the light transmission component includes: at least one mirror.
According to a second aspect of the embodiments of the present disclosure, there is provided a terminal including the image acquisition module described in the first aspect.
In the image acquisition module and the terminal provided by the embodiments of the present disclosure, the image acquisition module includes:
the lens; the first moving component, including: the first magnetic component fixedly arranged on the lens, and the first coil fixedly arranged on the housing of the image acquisition module, wherein the first coil generates the magnetic field when applied with the first driving signal, and drives the first magnetic component and the lens to move through the magnetic field; the light transmission component, configured to transmit the ambient light to the lens through the at least one reflection; and the second moving component, including: the second magnetic component fixedly arranged on the light transmission component, and the second coil fixedly arranged on the housing, where the second coil generates the magnetic field when applied with the second driving signal, and drives the second magnetic component and the light transmission component to move through the magnetic field.
It should be noted that the above general description and the following detailed description are merely exemplary and explanatory and should not be construed as limiting of the disclosure.

## BRIEF DESCRIPTION OF THE DRAWINGS

The accompanying drawings, which are incorporated in and constitute a part of this disclosure, illustrate embodiments consistent with the present disclosure and, together with the description, serve to explain the principles of the present disclosure.

FIG. 1 is a schematic diagram showing a structure of an image acquisition module according to some embodiments;
FIG. 2 is a schematic top view showing an image acquisition module according to some embodiments;
FIG. 3 is a schematic side view showing an image acquisition module according to some embodiments;
FIG. 4 is a schematic diagram showing a circuit structure according to some embodiments;
FIG. 5 is a schematic diagram showing a working principle of a magnetic sensing component according to some embodiments; and
FIG. 6 is a schematic diagram showing an image suppression ratio according to some embodiments.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

The terms used in the present disclosure are merely for the purpose of describing particular embodiments and are not intended to limit the present disclosure. As used in the present disclosure and the appended claims, the singular forms "a", "the" and "said" are intended to include the plural forms as well, unless the context clearly indicates otherwise. It should also be understood that the term "and / or" as used herein refers to and includes any or all possible combinations of one or more of the associated listed items.

It should be understood that, although the terms first, second, third, etc. may be used in the embodiments of the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the word "if" as used herein may be interpreted as "upon" or "when" or "in response to determination".

An application scenario of the embodiments of the present disclosure is that, for a terminal having a camera function such as a mobile phone, shaking of a camera device caused by shaking of a user's hand or other factors during a shooting process would affect imaging quality of a periscope camera. A lens of the periscope camera has both the need for focusing and zooming. How to simultaneously realize the focus and zoom of the lens , as well as anti-shake, and improve the image quality on the periscope camera is an urgent problem to be solved.

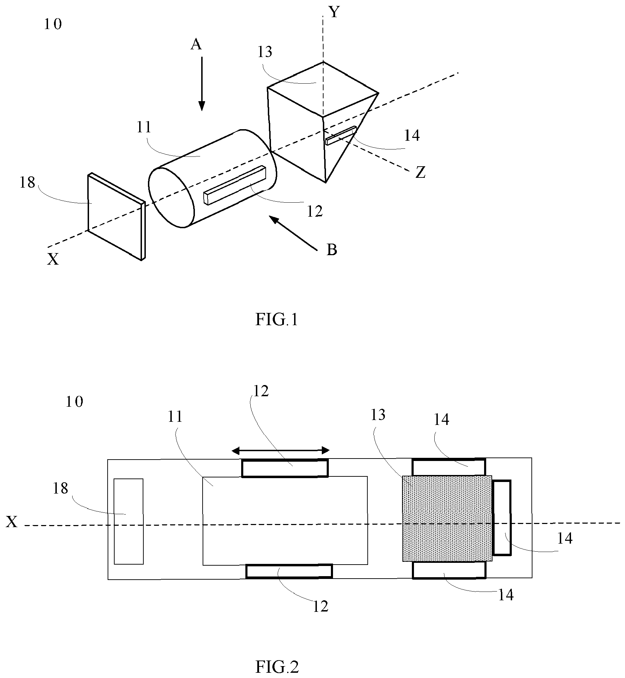

FIG. 1 shows an image acquisition module 10 according to some embodiments, including:
a lens 11; a first moving component 12, including: a first magnetic component fixedly arranged on the lens 11, and a first coil fixedly arranged on a housing of the image acquisition module 10, wherein the first coil generates a magnetic field when applied with a first driving signal, and drives the first magnetic component and the lens 11 to move through the magnetic field; a light transmission component 13, configured to transmit ambient light to the lens 11 through at least one reflection; a second moving component 14, including: a second magnetic component fixedly arranged on the light transmission component, and a second coil fixedly arranged on the housing, wherein the second coil generates a magnetic field when applied with a second driving signal, and drives the second magnetic component and the light transmission component 13 to move through the magnetic field.

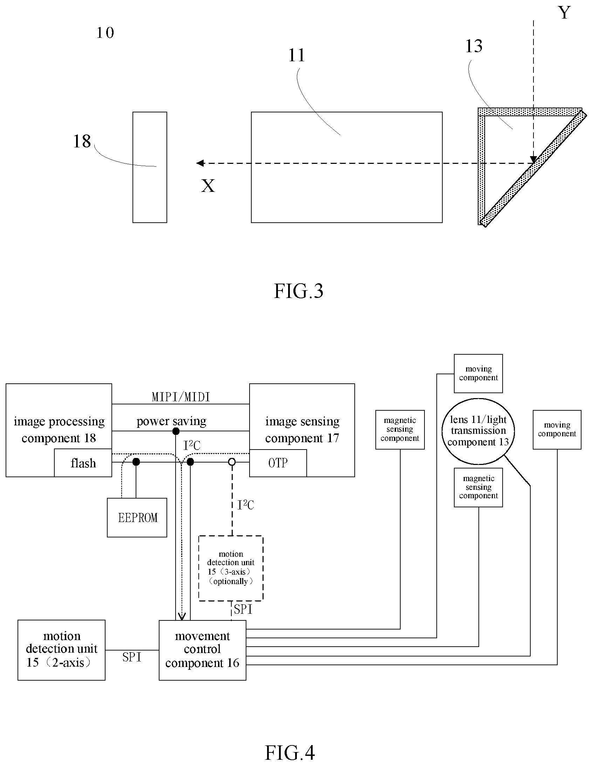

FIG. 2 is a top view of the image acquisition module 10 in a direction indicated by arrow A in FIG. 1, and FIG. 3 is a side view of the image acquisition module 10 in a direction indicated by arrow B in FIG. 1. In FIG. 1, a direction X is an optical axis direction of the lens 11.

As shown in FIG. 3, a direction Y in which the ambient light enters a periscope camera module is usually at a certain angle with the optical axis direction X of the lens 11, such as 90 degrees. The light transmission component 13 may use a mirror reflection principle or the like to deflect the incident ambient light, so that the ambient light enters the lens 11 along the optical axis. For example, as shown in FIG. 3, the light transmission component 13 makes the ambient light realize a 90-degree direction change.

The lens 11 may be movably installed in the image acquisition module 10 along the optical axis, and focusing or zooming may be achieved by moving the lens 11. The lens 11 may also be movably installed in the image acquisition module 10 in a direction different from the optical axis direction.

In some embodiments, the first moving component 12 is specifically used for moving the lens 11 back and forth along the optical axis of the lens 11; the second moving component 14 is specifically used for rotating the light transmission component 13.

The first moving component 12 may include a translation motor or the like, and the first moving component 12 may move the lens 11. For example, the first moving component 12 may move the lens 11 along the optical axis direction X. As shown in FIG. 2, there may be multiple first moving components 12. The first moving component 12 may move the lens 11 in multiple directions. For example, the first moving component 12 may move the lens 11 in the optical axis direction, an ambient light incident direction, and a direction perpendicular to the optical axis direction and the ambient light incident direction. Movement in different directions may be realized by different first moving components 12.

Movement in the optical axis direction may achieve focusing or zooming of the lens 11. Movement in the optical axis direction, the ambient light incident direction and the direction perpendicular to the optical axis direction and the ambient light incident direction may also realize movement opposite to a shaking direction when the periscope camera module shakes, thereby realizing anti-shake for the lens 11, that is, realizing an optical image stabilization (OIS) function.

The light transmission component 13 may be rotatably installed in the image acquisition module 10 to adjust a deflection angle of the ambient light. An exemplary light transmission component 13 may rotate around a Z axis shown in FIG. 1.

The second moving component 14 may include the translation motor or the like, and the second moving component 14 may move the light transmission component 13. For example, the second moving component 14 may push the light transmission component 13 to rotate around the rotation axis Z. As shown in FIG. 2, there may be multiple second moving components 14, which may be arranged on both sides of the rotation axis to improve stability of rotating the light transmission component 13 around the rotation axis. By rotating the light transmission component 13, the light transmission component 13 may transmit ambient light at different incident angles to the lens 11 along the optical axis X of the lens 11.

The light transmission component 13 rotates around the rotation axis, which may decrease a change in an angle between an object to be photographed and the image acquisition module 10 caused by the shaking of the periscope camera module, so as to realize the anti-shake for the periscope camera module and improve the imaging quality.

The first moving component 12 includes at least one first coil and at least one first magnetic component (not shown in the figure). The first magnetic component may be a magnet, and the at least one first magnetic component is located on the lens 11. The first magnetic component may include an S pole and an N pole, and the S pole and the N pole may be arranged parallel to the optical axis X. The first coil may be arranged on the housing of the image acquisition module 10. A driving signal of the first coil may be provided by an internal circuit of the image acquisition module 10 or an external circuit of the image acquisition module 10. The first coil may drive the first magnetic component and the lens 11 to move by generating a magnetic field that attracts or repels the magnetic field of the first magnetic component.

Exemplarily, a wire of the first coil may be wound with a twisted pair to avoid influence of a stray magnetic field on a main magnetic field (e.g., a direction of the main magnetic field). The first coil may adopt a series structure, and may control a current of the image acquisition module 10 through wiring of a soft circuit board (that is, a flexible circuit board) around the image acquisition module 10.

The second moving component 14 includes at least one second coil and at least one second magnetic component (not shown in the figure). The second magnetic component may be the magnet, and the at least one second magnetic component is located on the light transmission component 13. The second magnetic component may include the S pole and the N pole, and the S pole and the N pole may be arranged parallel to the optical axis X. The second coil may be arranged on the housing of the image acquisition module 10. The driving signal of the second coil may be provided by the internal circuit of the image acquisition module 10 or may be provided by the external circuit of the image acquisition module 10. The second coil may drive the second magnetic component and the light transmission component 13 to move by generating the magnetic field that attracts or repels the magnetic field of the second magnetic component.

Exemplarily, the wire of the second coil may be wound with the twisted pair to avoid the influence of the stray magnetic field on the main magnetic field (e.g., the direction of the main magnetic field). The second coil may adopt the series structure, and the second coil may control the current of the image acquisition module 10 through the wiring of the soft circuit board around the image acquisition module 10.

In this way, the lens 11 and the light transmission component 13 are provided with moving components that may move the lens 11 and the light transmission component 13, respectively, which may realize the focusing and zooming of the lens 11, and also realize the OIS function of the lens 11 and the light transmission component 13, which improves the imaging quality.

In some embodiments, the image acquisition module 10 further includes:
a movement control component 16, coupled to the first moving component 12 and the second moving component 14, and configured to send the first driving signal to drive the first moving component 12 to move the lens 11, and/or send the second driving signal to drive the second moving component 14 to move the light transmission component 13.

A block diagram of a control circuit of the image acquisition module 10 is shown in FIG. 4. In FIG. 4, the first moving component 12 may be an X-axis moving component or a Y-axis moving component. The second moving component 14 may be the X-axis moving component or the Y-axis moving component. The movement control component 16 may be an optical anti-shake controller. The movement control component 16 may be located inside the image acquisition module 10 or may be arranged outside the image acquisition module 10. For example, the movement control component 16 may be arranged on a circuit board of the terminal such as the mobile phone. The movement control component 16 may send the first driving signal and the second driving signal to the first coil of the first moving component 12 and/or the second coil of the second moving component 14, respectively.

The movement control component 16 may send the first driving signal and the second driving signal at the same time, or may not send the first driving signal and the second driving signal at the same time. The first driving signal and the second driving signal may be current signals. The movement control component 16 can control movement times of the first moving component 12 and the second moving component 14 by adjusting sending durations of the first driving signal and the second driving signal; the movement control component 16 may also control moving speeds of the first moving component 12 and the second moving component 14 by adjusting strengths of the first driving signal and the second driving signal.

In some embodiment, the image acquisition module 10 further includes: a first magnetic sensing component and/or a second magnetic sensing component.

The first magnetic sensing component is coupled to the movement control component 16, and is configured to sense a change value of the magnetic field of the first magnetic component, and send the sensed change value of the magnetic field of the first magnetic component to the movement control component 16.

The second magnetic sensing component is coupled to the movement control component 16, and is configured to sense a change value of the magnetic field of the second magnetic component, and send the sensed change value of the magnetic field of the second magnetic component to the movement control component 16.

The movement control component 16 is configured to determine a position change of the lens 11 according to the received change value of the magnetic field of the first magnetic component, and/or configured to determine a position change of the light transmission component 13 according to the received change value of the magnetic field of the second magnetic component.

The first magnetic sensing component and the second magnetic sensing component may include: a hall sensor, a magnetoresistance effect sensor (MR Sensor), or a giant magnetoresistance effect sensor (GMR Sensor), or the like.

As shown in FIG. 4, the first magnetic sensing component and the second magnetic sensing component are coupled to the movement control component 16, and the movement control component 16 receives sensing data of the first magnetic sensing component and the second magnetic sensing component.

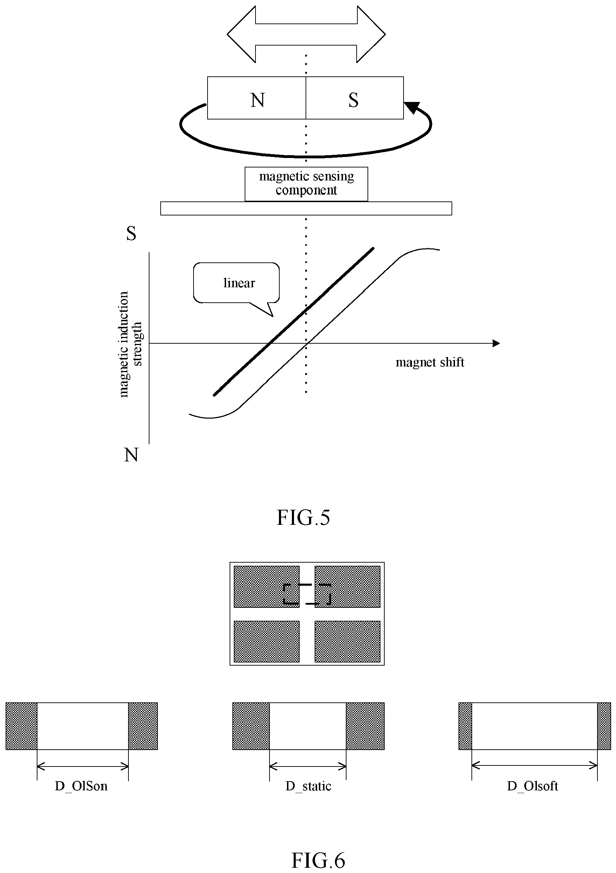

The magnetic field generated by the first coil attracts or repels the first magnetic component to drive the lens 11 to move, and a moving position of the lens 11 may be detected by the first magnetic sensing component provided corresponding to the first magnetic component. As shown in FIG. 5, an amount of change in the moving position of the lens 11 is in a linear relationship with a change in the magnetic field of the first magnetic component. The first magnetic sensing component determines the position change of the lens 11 based on the detected change in the magnetic field of the first magnetic component.

The magnetic field generated by the second coil attracts or repels the second magnetic component to drive the light transmission component 13 to move, and a moving position of the light transmission component 13 may be detected by the second magnetic sensing component provided corresponding to the second magnetic component. As shown in FIG. 5, an amount of change in the moving position of the light transmission component 13 is in a linear relationship with a change in the magnetic field of the second magnetic component. The second magnetic sensing component determines the position change of the light transmission component 13 based on the detected change in the magnetic field of the second magnetic component.

In some embodiments, the image acquisition module 10 further includes:
a motion detection unit 15, coupled to the movement control component 16 and configured to detect a motion of the image acquisition module 10 and output a motion detection signal.

The movement control component 16 is configured to calculate corresponding motion correction amount according to the motion detection signal, and adjust the first driving signal and/or the second driving signal based on the motion correction amount.

As shown in FIG. 4, the motion detection unit 15 is coupled to the movement control component 16, and the movement control component 16 receives sensing data of the motion detection unit 15.

The motion detection unit 15 may be an acceleration sensor or the like. The motion detection unit 15 may be used for detecting a motion state of the image acquisition module 10. For example, the motion detection unit 15 may detect accelerations of the image acquisition module 10 in different directions.

During the use of the image acquisition module 10, the motion state such as shaking may occur, which affects the imaging quality of the image acquisition module 10. Here, the motion detection unit 15 may adjust the first driving signal and/or the second driving signal to drive the lens 11 and/or the light transmission component 13 to offset the motion of the image acquisition module 10. In this way, the imaging quality may be improved.

In some embodiments, as shown in FIGS. 1 to 3, the image acquisition module 10 further includes:

an image sensing component 17, configured to form an image based on the ambient light acquired by the lens 11; and
an image processing component 18, coupled to the image sensing component 17 and the movement control component 16, and configured to determine an image quality parameter of the image formed by the image sensing component 17, and adjust the first driving signal and/or the second driving signal of the movement control component 16 based on the image quality parameter.

As shown in FIG. 4, the image processing component 18 and the movement control component 16 may be connected through a data bus, a control signal line, etc., and the image processing component 18 may control the first moving component 12 and the second moving component 14 by means of the movement control component 16.

The image sensor component 17 may be a complementary metal oxide semiconductor (CMOS) image sensor chip or the like, and is used for performing photoelectric conversion on the ambient light acquired by the lens 11 to convert it into a digital signal to form a digital image.

The image processing component 18 may perform image processing and analysis on the digital image acquired by the image sensing component 17 to determine the image quality parameter of the image. The image quality parameter may characterize the imaging quality of the image acquired by the image acquisition module 10. The image quality parameter may include resolution, color depth, image distortion, and anti-shake effect.

Due to a change of a focal length of the lens 11 and the shake that occurs when the image acquisition module 10 acquires the image, image quality parameters of digital images formed by the image sensing component 17 are different. Different image quality parameters have different image qualities. For example, an edge peak contrast of an object on the image acquired by the image sensing component 17 when the lens 11 is successfully focused is higher than that of the object on the image acquired by the image sensing component 17 when the lens 11 fails to focus.

The image processing component 18 may instruct the movement control component 16 to adjust positions of the lens 11 and the light transmission component 13 based on the image quality parameter until the image quality parameter meets a predetermined condition.

In some embodiments, the image quality parameter includes: an image suppression ratio.

The image suppression ratio may characterize the image quality of the image when the image acquisition module 10 occurs the shake. As shown in FIG. 6, when the image acquisition modules 10 are in different states, imaging distances between two pixels are different, that is, actual ambient light that each pixel can distinguish is different. Here, the different states may include: the image acquisition module 10 is in a static state, the image acquisition module 10 is in a dynamic state without an anti-shake function, the image acquisition module 10 is in the dynamic state with the anti-shake function, or the like. The image suppression ratio may be used for characterizing the effect of the anti-shake function. When a maximum image suppression ratio is detected, it indicates that the lens 11 and/or the light transmission component 13 are in a better imaging position at this time.

The image suppression ratio may be expressed by formula (1):

$$\text{Suppression Ratio [dB]} = 20\log((D_{\text{-OISoff}} - D_{\text{-static}})/(D_{\text{-OISon}} - D_{\text{-static}})) \qquad (1)$$

where $D_{\text{-OISon}}$ represents an imaging distance between two pixels when the optical image stabilization (OIS) function is on, $D_{\text{-OISoff}}$ represents an imaging distance between two pixels when the OIS function is off, and $D_{\text{-static}}$ represents an imaging distance between two pixels in a static state (e.g., when the mobile phone is in the static state).

In some embodiments, there are two first moving components 12, and these two first moving components 12 are distributed on both sides of the lens 11 with the optical axis of the lens 11 as a symmetry axis.

Here, there may be two first moving components 12 distributed on both sides of the lens 11 with the optical axis as the symmetry axis. In this way, when the first moving component 12 moves the lens 11, pushing forces may be applied from both sides of the lens 11 to keep the lens 11 moving linearly along the optical axis, which reduces the shaking of the lens 11 caused by an displacement in an non-optical axis direction generated due to an unilateral force of the lens 11, thereby improving the imaging quality.

In some embodiments, there are three second moving components 14, and these three second moving components 14 are located on a first side, a second side, and a third side of the light transmission component 13, respectively. The first side and the second side are distributed with the optical axis of the lens 11 as the symmetry axis, and the third side is perpendicular to the optical axis.

Here, there may be three second moving components 14, and in this case, two second moving components 14 are arranged on both sides of the light transmission component 13 parallel to the optical axis with the optical axis as the symmetry axis, and the remaining second moving component is arranged on a side perpendicular to the optical axis. In this way, when the second moving component 14 moves the light transmission component 13, the forces applied to the light transmission component 13 may be kept uniform when the light transmission component 13 is rotating, which reduces the shaking of the light transmission component 13 caused by the displacement in the non-optical axis direction generated due to the uneven forces applied to the light transmission component 13, thereby improving the imaging quality.

In some embodiment, the light transmission component 13 includes: at least one mirror.

The light transmission component 13 may deflect the ambient light via the mirror. The mirror here may be a flat mirror or a reflective prism.

The embodiments of the present disclosure also provide a terminal. Here, the terminal may include an electronic device with an image acquisition function such as the mobile phone, a tablet computer and the like. The terminal may include the image acquisition module 10 as shown in FIG. 1.

As shown in FIG. 1, the image acquisition module 10 in the terminal includes:

a lens 11; a first moving component 12, including: a first magnetic component fixedly arranged on the lens 11, and a first coil fixedly arranged on a housing of the image acquisition module 10, wherein the first coil generates a magnetic field when applied with a first driving signal, and drives the first magnetic component and the lens 11 to move through the magnetic field; a light transmission component 13, configured to transmit ambient light to the lens 11 through at least one reflection; a second moving component 14, including: a second magnetic component fixedly arranged on the light transmission component, and a second coil fixedly arranged on the housing, wherein the second coil generates a magnetic field when applied with a second driving signal, and drives the second magnetic component and the light transmission component 13 to move through the magnetic field. Here, the image acquisition module 10 may be a periscope camera module inside the terminal such as the mobile phone. In the image acquisition module 10, the lens 11 is used for acquiring the ambient light transmitted by the light transmission component 13 for optical imaging. The lens 11 may include a plurality of optical lenses.

FIG. 2 is a top view of the image acquisition module 10 in a direction indicated by arrow A in FIG. 1, and FIG. 3 is a side view of the image acquisition module 10 in a direction indicated by arrow B in FIG. 1. In FIG. 1, a direction X is an optical axis direction of the lens 11.

As shown in FIG. 3, a direction Y in which the ambient light enters a periscope camera module is usually at a certain angle with the optical axis direction X of the lens 11, such as 90 degrees. The light transmission component 13 may use a mirror reflection principle or the like to deflect the incident ambient light, so that the ambient light enters the lens 11 along the optical axis. For example, as shown in FIG. 3, the light transmission component 13 makes the ambient light realize a 90-degree direction change.

The lens 11 may be movably installed in the image acquisition module 10 along the optical axis, and focusing or zooming may be achieved by moving the lens 11. The lens 11 may also be movably installed in the image acquisition module 10 in a direction different from the optical axis direction.

In some embodiments, the first moving component 12 is specifically used for moving the lens 11 back and forth along the optical axis of the lens 11; the second moving component 14 is specifically used for rotating the light transmission component 13.

The first moving component 12 may include a translation motor or the like, and the first moving component 12 may move the lens 11. For example, the first moving component 12 may move the lens 11 along the optical axis direction X. As shown in FIG. 2, there may be multiple first moving components 12. The first moving component 12 may move the lens 11 in multiple directions. For example, the first moving component 12 may move the lens 11 in the optical axis direction, an ambient light incident direction, and a direction perpendicular to the optical axis direction and the ambient light incident direction. Movement in different directions may be realized by different first moving components 12.

Movement in the optical axis direction may achieve focusing or zooming of the lens 11. Movement in the optical axis direction, the ambient light incident direction and the direction perpendicular to the optical axis direction and the ambient light incident direction may also realize movement opposite to a shaking direction when the periscope camera module shakes, thereby realizing anti-shake for the lens 11, that is, realizing an optical image stabilization (OIS) function.

The light transmission component 13 may be rotatably installed in the image acquisition module 10 to adjust a deflection angle of the ambient light. An exemplary light transmission component 13 may rotate around a Z axis shown in FIG. 1.

The second moving component 14 may include the translation motor or the like, and the second moving component 14 may move the light transmission component 13. For example, the second moving component 14 may push the light transmission component 13 to rotate around the rotation axis Z. As shown in FIG. 2, there may be multiple second moving components 14, which may be arranged on both sides of the rotation axis to improve stability of rotating the light transmission component 13 around the rotation axis. By rotating the light transmission component 13, the light transmission component 13 may transmit ambient light at different incident angles to the lens 11 along the optical axis X of the lens 11.

The light transmission component 13 rotates around the rotation axis, which may decrease a change in an angle between an object to be photographed and the image acquisition module 10 caused by the shaking of the periscope camera module, so as to realize the anti-shake for the periscope camera module and improve the imaging quality.

The first moving component 12 includes at least one first coil and at least one first magnetic component (not shown in the figure). The first magnetic component may be a magnet, and the at least one first magnetic component is located on the lens 11. The first magnetic component may include an S pole and an N pole, and the S pole and the N pole may be arranged parallel to the optical axis X. The first coil may be arranged on the housing of the image acquisition module 10. A driving signal of the first coil may be provided by an internal circuit of the image acquisition module 10 or may be provided by an external circuit of the image acquisition module 10. The first coil may drive the first magnetic component and the lens 11 to move by generating a magnetic field that attracts or repels the magnetic field of the first magnetic component.

Exemplarily, a wire of the first coil may be wound with a twisted pair to avoid an influence of a stray magnetic field on a main magnetic field (e.g., a direction of the main magnetic field). The first coil may adopt a series structure, and the first coil may control a current of the image acquisition module 10 through wiring of a soft circuit board around the image acquisition module 10.

The second moving component 14 includes at least one second coil and at least one second magnetic component (not shown in the figure). The second magnetic component may be the magnet, and the at least one second magnetic component is located on the light transmission component 13. The second magnetic component may include the S pole and the N pole, and the S pole and the N pole may be arranged parallel to the optical axis X. The second coil may be arranged on the housing of the image acquisition module 10. The driving signal of the second coil may be provided by the internal circuit of the image acquisition module 10 or may be provided by the external circuit of the image acquisition module 10. The second coil may drive the second magnetic component and the light transmission component 13 to move by generating the magnetic field that attracts or repels the magnetic field of the second magnetic component.

Exemplarily, the wire of the second coil may be wound with the twisted pair to avoid the influence of the stray magnetic field on the main magnetic field (e.g., the direction of the main magnetic field). The second coil may adopt the series structure, and the second coil may control the current of the image acquisition module 10 through the wiring of the soft circuit board around the image acquisition module 10.

In this way, the lens 11 and the light transmission component 13 are provided with moving components that may move the lens 11 and the light transmission component 13, respectively, which may realize, so that the lens 11 and the light transmission component 13 may move, thereby realizing the zooming and anti-shake functions of the image acquisition module 10, improving the imaging quality and improving user shooting experience.

In some embodiments, the image acquisition module 10 further includes:
a movement control component 16, coupled to the first moving component 12 and the second moving component 14, and configured to send the first driving signal to drive the first moving component 12 to move the lens 11, and/or send the second driving signal to drive the second moving component 14 to move the light transmission component 13.

A block diagram of a control circuit of the image acquisition module 10 is shown in FIG. 4. In FIG. 4, the first moving component 12 may be an X-axis moving component or a Y-axis moving component. The second moving component 14 may be the X-axis moving component or the Y-axis moving component. The movement control component 16 may be an optical anti-shake controller. The movement control component 16 may be located inside the image acquisition module 10 or may be arranged outside the image acquisition module 10. For example, the movement control component 16 may be arranged on a circuit board of the terminal such as the mobile phone. The movement control component 16 may send the first driving signal and the second driving signal to the first coil of the first moving component 12 and/or the second coil of the second moving component 14, respectively.

The movement control component 16 may send the first driving signal and the second driving signal at the same time, or may not send the first driving signal and the second driving signal at the same time. The first driving signal and the second driving signal may be current signals. The movement control component 16 can control movement times of the first moving component 12 and the second moving component 14 by adjusting sending durations of the first driving signal and the second driving signal; the movement control component 16 may also control moving speeds of the first moving component 12 and the second moving component 14 by adjusting strengths of the first driving signal and the second driving signal.

In some embodiment, the image acquisition module 10 further includes: a first magnetic sensing component and/or a second magnetic sensing component.

The first magnetic sensing component is coupled to the movement control component 16, and is configured to sense a change value of the magnetic field of the first magnetic component, and send the sensed change value of the magnetic field of the first magnetic component to the movement control component 16.

The second magnetic sensing component is coupled to the movement control component 16, and is configured to sense a change value of the magnetic field of the second magnetic component, and send the sensed change value of the magnetic field of the second magnetic component to the movement control component 16.

The movement control component 16 is configured to determine a position change of the lens 11 according to the received change value of the magnetic field of the first magnetic component, and/or configured to determine a position change of the light transmission component 13 according to the received change value of the magnetic field of the second magnetic component.

The first magnetic sensing component and the second magnetic sensing component may include: a hall sensor, a magnetoresistance effect sensor (MR Sensor), or a giant magnetoresistance effect sensor (GMR Sensor), or the like.

As shown in FIG. 4, the first magnetic sensing component and the second magnetic sensing component are coupled to the movement control component 16, and the movement control component 16 receives sensing data of the first magnetic sensing component and the second magnetic sensing component.

The magnetic field generated by the first coil attracts or repels the first magnetic component to drive the lens 11 to move, and a moving position of the lens 11 may be detected by the first magnetic sensing component provided corresponding to the first magnetic component. As shown in FIG. 5, an amount of change in the moving position of the lens 11 is in a linear relationship with a change in the magnetic field of the first magnetic component. The first magnetic sensing component determines the position change of the lens 11 based on the detected change in the magnetic field of the first magnetic component.

The magnetic field generated by the second coil attracts or repels the second magnetic component to drive the light transmission component 13 to move, and a moving position of the light transmission component 13 may be detected by the second magnetic sensing component provided corresponding to the second magnetic component. As shown in FIG. 5, an amount of change in the moving position of the light transmission component 13 is in a linear relationship with a change in the magnetic field of the second magnetic component. The second magnetic sensing component determines the position change of the light transmission component 13 based on the detected change in the magnetic field of the second magnetic component.

In some embodiments, the image acquisition module 10 further includes:
a motion detection unit 15, coupled to the movement control component 16 and is configured to detect a motion of the image acquisition module 10 and output a motion detection signal.

The movement control component 16 is configured to calculate corresponding motion correction amount according to the motion detection signal, and adjust the first driving signal and/or the second driving signal based on the motion correction amount.

As shown in FIG. 4, the motion detection unit 15 is coupled to the movement control component 16, and the movement control component 16 receives sensing data of the motion detection unit 15.

The motion detection unit 15 may be an acceleration sensor or the like. The motion detection unit 15 may be used for detecting a motion state of the image acquisition module 10. For example, the motion detection unit 15 may detect accelerations of the image acquisition module 10 in different directions.

During the use of the image acquisition module 10, the motion state such as shaking may occur, which affects the imaging quality of the image acquisition module 10. Here, the motion detection unit 15 may adjust the first driving signal and/or the second driving signal to drive the lens 11 and/or the light transmission component 13 to offset the motion of the image acquisition module 10. In this way, the anti-shake function may be achieved, and the imaging quality may be improved.

In some embodiments, as shown in FIGS. 1 to 3, the image acquisition module 10 further includes:

an image sensing component 17, configured to form an image based on the ambient light acquired by the lens 11; and
an image processing component 18, coupled to the image sensing component 17 and the movement control component 16, and configured to determine an image quality parameter of the image formed by the image sensing component 17, and adjust the first driving signal and/or the second driving signal of the movement control component 16 based on the image quality parameter.

As shown in FIG. 4, the image processing component 18 and the movement control component 16 may be connected through a data bus, a control signal line, etc., and the image processing component 18 may control the first moving component 12 and the second moving component 14 by means of the movement control component 16.

The image sensor component 17 may be a complementary metal oxide semiconductor (CMOS) image sensor chip or the like, and is used for performing photoelectric conversion on the ambient light acquired by the lens 11 to convert it into a digital signal to form a digital image.

The image processing component 18 may perform image processing and analysis on the digital image acquired by the image sensing component 17 to determine the image quality parameter of the image. The image quality parameter may characterize the imaging quality of the image acquired by the image acquisition module 10. The image quality parameter may include resolution, color depth, image distortion, and anti-shake effect.

Due to a change of a focal length of the lens 11 and the shake that occurs when the image acquisition module 10 acquires the image, image quality parameters of digital images formed by the image sensing component 17 are different. Different image quality parameters have different image qualities. For example, an edge peak contrast of an object on the image acquired by the image sensing component 17 when the lens 11 is successfully focused is higher than that of the object on the image acquired by the image sensing component 17 when the lens 11 fails to focus.

The image processing component 18 may instruct the movement control component 16 to adjust positions of the lens 11 and the light transmission component 13 based on the image quality parameter until the image quality parameter meets a predetermined condition.

In this way, the lens and/or the light transmission component are adjusted based on the image quality parameter, thereby improving the imaging quality.

In some embodiments, the image quality parameter includes: an image suppression ratio.

The image suppression ratio may characterize the image quality of the image when the image acquisition module 10 occurs the shake. As shown in FIG. 6, when the image acquisition modules 10 are in different states, imaging distances between two pixels are different, that is, actual ambient light that each pixel can distinguish is different. Here, the different states may include: the image acquisition module 10 is in a static state, the image acquisition module 10 is in a dynamic state without an anti-shake function, the image acquisition module 10 is in the dynamic state with the anti-shake function, or the like. The image suppression ratio may be used for characterizing the effect of the anti-shake function. When a maximum image suppression ratio is detected, it indicates that the lens 11 and/or the light transmission component 13 are in a better imaging position at this time.

The image suppression ratio may be expressed by formula (1):

$$\text{Suppression Ratio [dB]} = 20\log((D_{\text{-OISoff}}-D_{\text{-static}})/(D_{\text{-OISon}}-D_{\text{-static}})) \qquad (1)$$

where $D_{-OISon}$ represents an imaging distance between two pixels when the optical image stabilization (OIS) function is on, $D_{-OISoff}$ represents an imaging distance between two pixels when the OIS function is off, and $D_{-static}$ represents an imaging distance between two pixels in a static state (e.g., when the mobile phone is in the static state).

In some embodiments, there are two first moving components 12, and these two first moving components 12 are distributed on both sides of the lens 11 with the optical axis of the lens 11 as a symmetry axis.

Here, there may be two first moving components 12 distributed on both sides of the lens 11 with the optical axis as the symmetry axis. In this way, when the first moving component 12 moves the lens 11, pushing forces may be applied from both sides of the lens 11 to keep the lens 11 moving linearly along the optical axis, which reduces the shaking of the lens 11 caused by an displacement in an non-optical axis direction generated due to an unilateral force of the lens 11, thereby improving the imaging quality.

In some embodiments, there are three second moving components 14, and these three second moving components 14 are located on a first side, a second side, and a third side of the light transmission component 13, respectively. The first side and the second side are distributed with the optical axis of the lens 11 as the symmetry axis, and the third side is perpendicular to the optical axis.

Here, there may be three second moving components 14, and in this case two second moving components 14 are arranged on both sides of the light transmission component 13 parallel to the optical axis with the optical axis as the symmetry axis, and the remaining second moving component is arranged on a side perpendicular to the optical axis. In this way, when the second moving component 14 moves the light transmission component 13, the forces applied to the light transmission component 13 may be kept uniform when the light transmission component 13 is rotating, which reduces the shaking of the light transmission component 13 caused by the displacement in the non-optical axis direction generated due to the uneven forces applied to the light transmission component 13, thereby improving the imaging quality.

In some embodiment, the light transmission component 13 includes: at least one mirror.

The light transmission component 13 may deflect the ambient light via the mirror. The mirror here may be a flat mirror or a reflective prism.

A specific example is provided below in conjunction with any of the above embodiments:

The periscope camera module has become an inevitable trend in devices. The magnet is arranged on the lens. North and south poles of each magnet is distributed left and right. Each magnet corresponds to a copper wire coil. The copper wire is wound with the twisted pair to avoid the influence of the stray magnetic field on the main magnetic direction. The multiple copper wire coils belong to the series structure. A current of the coil is controlled by the wiring of the soft circuit board around the lens, and a pulse width modulation method (PWM) is used to achieve different current adjustments. Different current modulations may achieve desired displacement by driving. Displacement compensation of the lens is achieved according to the cooperation of the left and right magnets and upper and lower magnets with the magnetic fields generated by the corresponding coils. Whether the driving is in place at the moment is determined according to the image suppression ratio acquired by the image sensing component as a closed-loop control.

As shown in FIG. 4, the light passes through the lens, the lens is designed with the magnet, and there are coils that generate magnetic fields in multiple directions X, Y, and Z around the lens. When the movement in a certain direction is needed, the current is applied to two coils in the certain direction to generate the magnetic field by the coils. The magnetic field generated by the coil attracts or repels the magnetic field of the magnet to drive the lens to move. The moving position of the lens is detected by a hall sensor, and an displacement of the movement is in a linear relationship with the change of the magnetic field, as shown in FIG. 5. After the adjustment of the lens, the imaging is performed through the image sensing component. According to the image suppression ratio as shown in FIG. 6, when the movement of the lens is adjusted, the image suppression ratio will change. When the maximum image suppression ratio is detected, the lens position is adjusted in place.

As shown in FIG. 3, an imaging light path is shown by a dotted line. The light is deflected by 90° through the light transmission component, such as the prism, and the light is onto the image sensing component through the lens. The magnet, coil and hall sensor are arranged around the prism and the lens. The north and south poles of the magnet is in a left and right direction, and a driving circuit is shown in FIG. 4. In FIG. 5, the lens is only driven or advances in the direction X to achieve the zooming for the image; the prism lens moves in the direction Y as shown in FIG. 3, thereby changing the optical path to ensure that the optical path may vertically passes through the lens when the shake occurs.

**Claims**

**1.** An image acquisition module (10), comprising:

a lens (11);
a first moving component (12), comprising: a first magnetic component fixedly arranged on the lens (11), and a first coil fixedly arranged on a housing of the image acquisition module (10), wherein the first coil is configured to generate a magnetic field when applied with a first driving signal, and configured to drive the first magnetic component and the lens (11) to move through the magnetic field;

a light transmission component (13), configured to transmit ambient light to the lens (11) through at least one reflection; and

a second moving component (14), comprising: a second magnetic component fixedly arranged on the light transmission component (13), and a second coil fixedly arranged on the housing, wherein the second coil is configured to generate a magnetic field when applied with a second driving signal, and configured to drive the second magnetic component and the light transmission component (13) to move through the magnetic field.

2. The image acquisition module (10) according to claim 1, further comprising:
a movement control component (16), coupled to the first moving component (12) and the second moving component (14), and configured to send the first driving signal to drive the first moving component (12) to move the lens (11), and/or send the second driving signal to drive the second moving component (14) to move the light transmission component (13).

3. The image acquisition module (10) according to claim 2, further comprising: a first magnetic sensing component and/or a second magnetic sensing component, wherein:

the first magnetic sensing component is coupled to the movement control component (16), and is configured to sense a change value of the magnetic field of the first magnetic component, and configured to send the sensed change value of the magnetic field of the first magnetic component to the movement control component (16);

the second magnetic sensing component is coupled to the movement control component (16), and is configured to sense a change value of the magnetic field of the second magnetic component, and configured to send the sensed change value of the magnetic field of the second magnetic component to the movement control component (16); and

the movement control component (16) is configured to determine a position change of the lens (11) according to the received change value of the magnetic field of the first magnetic component, and/or configured to determine a position change of the light transmission component (13) according to the received change value of the magnetic field of the second magnetic component.

4. The image acquisition module (10) according to claim 2, further comprising:

a motion detection unit (15), coupled to the movement control component (16) and configured to detect a motion of the image acquisition module (10) and configured to output a motion detection signal; and

the movement control component (16) is configured to calculate corresponding motion correction amount according to the motion detection signal, and configured to adjust the first driving signal and/or the second driving signal based on the motion correction amount.

5. The image acquisition module (10) according to claim 2, further comprising:

an image sensing component (17), configured to form an image based on the ambient light acquired by the lens (11); and

an image processing component (18), coupled to the image sensing component (17) and the movement control component (16), and configured to determine an image quality parameter of the image formed by the image sensing component (17), and configured to adjust the first driving signal and/or the second driving signal of the movement control component (16) based on the image quality parameter.

6. The image acquisition module (10) according to claim 5, wherein:
the image quality parameter comprises an image suppression ratio.

7. The image acquisition module (10) according to claim 1, wherein the first coil and/or the second coil are wound with a twisted pair.

8. The image acquisition module (10) according to claim 1, wherein:
there are two first moving components (12), and the two first moving components (12) are distributed on both sides of the lens (11) with an optical axis of the lens (11) as a symmetry axis.

**9.** The image acquisition module (10) according to claim 1, wherein:
there are three second moving components (14), and the three second moving components (14) are located on a first side, a second side, and a third side of the light transmission component (13), respectively, and wherein the first side and the second side are distributed with an optical axis of the lens (11) as a symmetry axis, and the third side is perpendicular to the optical axis.

**10.** The image acquisition module (10) according to any one of claims 1 to 9, wherein:

the first moving component (12) is specifically configured to move the lens (11) back and forth along an optical axis of the lens (11); and
the second moving component (14) is specifically configured to rotate the light transmission component (13).

**11.** The image acquisition module (10) according to any one of claims 1 to 9, wherein:
the light transmission component (13) comprises at least one mirror.

**12.** A terminal, comprising the image acquisition module (10) according to any one of claims 1 to 11.

**Patentansprüche**

**1.** Bilderfassungsmodul (10) mit:

einer Linse (11);
einer ersten Bewegungskomponente (12) mit: einer ersten magnetischen Komponente, die fest an der Linse (11) angeordnet ist, und einer ersten Spule, die fest an einem Gehäuse des Bilderfassungsmoduls (10) angeordnet ist, wobei die erste Spule dazu ausgebildet ist, ein magnetisches Feld zu erzeugen, wenn ein erstes Ansteuerungssignal angelegt wird, und dazu ausgebildet ist, die erste magnetische Komponente und die Linse (11) zur Bewegung durch das Magnetfeld anzutreiben;
einer Lichttransmissionskomponente (13), die dazu ausgebildet ist, Umgebungslicht durch mindestens eine Reflexion an die Linse (11) zu transmittieren; und
einer zweiten Bewegungskomponente (14) mit: einer zweiten magnetischen Komponente, die fest an der Lichttransmissionskomponente (13) angeordnet ist, und einer zweiten Spule, die fest an dem Gehäuse angeordnet ist, wobei die zweite Spule dazu ausgebildet ist, ein magnetisches Feld zu erzeugen, wenn ein erstes Ansteuerungssignal angelegt wird, und dazu ausgebildet ist, die zweite magnetische Komponente und die Lichttransmissionskomponente (13) zur Bewegung durch das Magnetfeld anzutreiben.

**2.** Bilderfassungsmodul (10) nach Anspruch 1, ferner mit:
einer Bewegungssteuerkomponente (16), die mit der ersten Bewegungskomponente (12) und der zweiten Bewegungskomponente (14) gekoppelt ist und dazu ausgebildet ist, das erste Ansteuerungssignal zu senden, um die erste Bewegungskomponente (12) zum Bewegen der Linse (11) anzusteuern, und/oder das zweite Ansteuerungssignal zu senden, um die zweite Bewegungskomponente (14) zum Bewegen der Lichttransmissionskomponente (13) anzusteuern.

**3.** Bilderfassungsmodul (10) nach Anspruch 2, ferner mit: einer ersten magnetischen Sensorkomponente und/oder einer zweiten magnetischen Sensorkomponente, wobei:

die erste Magnetsensorkomponente mit der Bewegungssteuerkomponente (16) gekoppelt ist und dazu ausgebildet ist einen Änderungswert des Magnetfelds der ersten magnetischen Komponente zu erfassen, und dazu ausgebildet ist, den erfassten Änderungswert des Magnetfelds der ersten magnetischen Komponente an die Bewegungssteuerkomponente (16) zu senden;
die zweite Magnetsensorkomponente mit der Bewegungssteuerkomponente (16) gekoppelt ist und dazu ausgebildet ist, einen Änderungswert des Magnetfelds der zweiten magnetischen Komponente zu erfassen, und dazu ausgebildet ist, den erfassten Änderungswert des Magnetfelds der zweiten magnetischen Komponente an die Bewegungssteuerkomponente (16) zu senden; und
die Bewegungssteuerkomponente (16) dazu ausgebildet ist, eine Positionsänderung der Linse (11) gemäß dem empfangenen Änderungswert des Magnetfelds der ersten magnetischen Komponente zu bestimmen und/oder eine Positionsänderung der Lichttransmissionskomponente (13) gemäß dem empfangenen Änderungswert des Magnetfelds der zweiten magnetischen Komponente zu bestimmen.

**4.** Bilderfassungsmodul (10) nach Anspruch 2, ferner mit:

einer Bewegungserkennungseinheit (15), die mit der Bewegungssteuerkomponente (16) gekoppelt ist und dazu ausgebildet ist, eine Bewegung des Bilderfassungsmoduls (10) zu erkennen, und dazu ausgebildet ist, ein Bewegungserkennungssignal auszugeben; und
die Bewegungssteuerkomponente (16) dazu ausgebildet ist, einen entsprechenden Bewegungskorrekturbetrag gemäß dem Bewegungserkennungssignal zu berechnen, und dazu ausgebildet ist, erste Ansteuerungssignal und/oder das zweite Ansteuerungssignal basierend auf dem Bewegungskorrekturbetrag anzupassen.

**5.** Bilderfassungsmodul (10) nach Anspruch 2, ferner mit:

einer Bildsensorkomponente (17), die dazu ausgebildet ist, ein Bild basierend auf dem durch die Linse (11) erfassten Umgebungslicht zu formen; und
einer Bildverarbeitungskomponente (18), die mit der Bildsensorkomponente (17) und der Bewegungssteuerkomponente (16) gekoppelt ist und dazu ausgebildet ist, einen Bildqualitätsparameter des von der Bildsensorkomponente (17) geformten Bildes zu bestimmen, und dazu ausgebildet ist, das erste Ansteuersignal und/oder das zweite Ansteuersignal der Bewegungssteuerkomponente (16) basierend auf dem Bildqualitätsparameter anzupassen.

**6.** Bilderfassungsmodul (10) nach Anspruch 5, bei welchem:
der Bildqualitätsparameter ein Bildunterdrückungsverhältnis aufweist.

**7.** Bilderfassungsmodul (10) nach Anspruch 1, bei welchem die erste Spule und die zweite Spule mit einem verdrillten Paar gewunden sind.

**8.** Bilderfassungsmodul (10) nach Anspruch 1, bei welchem:
zwei erste Bewegungskomponenten (12) vorhanden sind, und die beiden ersten Bewegungskomponenten (12) auf beide Seiten der Linse (11) mit einer optischen Achse der Linse (11) als Symmetrieachse verteilt sind.

**9.** Bilderfassungsmodul (10) nach Anspruch 1, bei welchem:
drei zweite Bewegungskomponenten (14) vorhanden sind, und die drei zweiten Bewegungskomponenten (14) auf einer ersten Seite, einer zweiten Seite beziehungsweise einer dritten Seite der Lichttransmissionskomponente (13) angeordnet sind, und wobei die erste Seite und die zweite Seite mit einer optischen Achse der Linse (11) als Symmetrieachse verteilt sind, und die dritte Seite zu der optischen Achse senkrecht ist.

**10.** Bilderfassungsmodul (10) nach einem der Ansprüche 1 bis 9, bei welchem:

die erste Bewegungskomponente (12) spezifisch dazu ausgebildet ist, die Linse (11) entlang einer optischen Achse der Linse (11) vor und zurück zu bewegen; und
die zweite Bewegungskomponente (14) spezifisch dazu ausgebildet ist, um die Lichttransmissionskomponente (13) zu drehen.

**11.** Bilderfassungsmodul (10) nach einem der Ansprüche 1 bis 9, bei welchem:
die Lichttransmissionskomponente (13) mindestens einen Spiegel aufweist.

**12.** Endgerät mit dem Bilderfassungsmodul (10) nach einem der Ansprüche 1 bis 11.


**Revendications**

**1.** Module d'acquisition d'image (10) ; comprenant :

une lentille (11) ;
un premier composant mobile (12), comprenant : un premier composant magnétique agencé de manière fixe sur la lentille (11), et une première bobine agencée de manière fixe sur un boîtier du module d'acquisition d'image (10), dans lequel la première bobine est configurée pour générer un champ magnétique lorsqu'elle est appliquée avec un premier signal de commande, et configurée pour entraîner le premier composant magnétique et la lentille (11) à se déplacer à travers le champ magnétique ;

un composant de transmission de la lumière (13), configuré pour transmettre la lumière ambiante à la lentille (11) à travers au moins une réflexion ; et
un second composant mobile (14), comprenant : un second composant magnétique agencé de manière fixe sur le composant de transmission de la lumière (13), et une seconde bobine agencée de manière fixe sur le boîtier, dans lequel la seconde bobine est configurée pour générer un champ magnétique lorsqu'elle est appliquée avec un second signal de commande, et configurée pour entraîner le second composant magnétique et le composant de transmission de la lumière (13) à se déplacer à travers le champ magnétique.

**2.** Module d'acquisition d'image (10) selon la revendication 1, comprenant en outre :
un composant de contrôle de mouvement (16), couplé au premier composant mobile (12) et au second composant mobile (14), et configuré pour envoyer le premier signal de commande afin d'entraîner le premier composant mobile (12) pour déplacer la lentille (11), et/ou pour envoyer le second signal de commande afin d'entraîner le second composant mobile (14) pour déplacer le composant de transmission de la lumière (13).

**3.** Module d'acquisition d'image (10) selon la revendication 2, comprenant en outre : un premier composant de détection magnétique et/ou un second composant de détection magnétique, dans lequel :

le premier composant de détection magnétique est couplé au composant de contrôle de mouvement (16), et est configuré pour détecter une valeur de changement du champ magnétique du premier composant magnétique, et configuré pour envoyer la valeur de changement détectée du champ magnétique du premier composant magnétique au composant de contrôle de mouvement (16) ;
le second composant de détection magnétique est couplé au composant de contrôle de mouvement (16), et est configuré pour détecter une valeur de changement du champ magnétique du second composant magnétique, et configuré pour envoyer la valeur de changement détectée du champ magnétique du second composant magnétique au composant de contrôle de mouvement (16) ; et
le composant de contrôle de mouvement (16) est configuré pour déterminer un changement de position de la lentille (11) selon la valeur de changement reçue du champ magnétique du premier composant magnétique, et/ou configuré pour déterminer un changement de position du composant de transmission de la lumière (13) selon la valeur de changement reçue du champ magnétique du second composant magnétique.

**4.** Module d'acquisition d'image (10) selon la revendication 2, comprenant en outre :

une unité de détection de mouvement (15), couplée au composant de contrôle de mouvement (16) et configurée pour détecter un mouvement du module d'acquisition d'image (10) et configurée pour émettre un signal de détection de mouvement ; et
le composant de contrôle de mouvement (16) est configuré pour calculer la quantité de correction de mouvement correspondante selon le signal de détection de mouvement, et configuré pour ajuster le premier signal de commande et/ou le second signal de commande en fonction de la quantité de correction de mouvement.

**5.** Module d'acquisition d'image (10) selon la revendication 2, comprenant en outre :

un composant de détection d'image (17), configuré pour former une image en fonction de la lumière ambiante acquise par la lentille (11) ; et
un composant de traitement d'image (18), couplé au composant de détection d'image (17) et au composant de contrôle de mouvement (16), et configuré pour déterminer un paramètre de qualité d'image de l'image formée par le composant de détection d'image (17), et configuré pour ajuster le premier signal de commande et/ou le second signal de commande du composant de contrôle de mouvement (16) en fonction du paramètre de qualité d'image.

**6.** Module d'acquisition d'image (10) selon la revendication 5, dans lequel :
le paramètre de qualité d'image comprend un taux de suppression d'image.

**7.** Module d'acquisition d'image (10) selon la revendication 1, dans lequel la première bobine et/ou la seconde bobine sont enroulées avec une paire torsadée.

**8.** Module d'acquisition d'image (10) selon la revendication 1, dans lequel :
il y a deux premiers composants mobiles (12), et les deux premiers composants mobiles (12) sont répartis des deux côtés de la lentille (11) avec un axe optique de la lentille (11) comme axe de symétrie.

9. Module d'acquisition d'image (10) selon la revendication 1, dans lequel :
il y a trois seconds composants mobiles (14), et les trois seconds composants mobiles (14) sont situés sur un premier côté, un deuxième côté et un troisième côté du composant de transmission de la lumière (13), respectivement, et dans lequel le premier côté et le deuxième côté sont répartis avec un axe optique de la lentille (11) comme axe de symétrie, et le troisième côté est perpendiculaire à l'axe optique.

10. Module d'acquisition d'image (10) selon l'une quelconque des revendications 1 à 9, dans lequel :

le premier composant mobile (12) est spécifiquement configuré pour déplacer la lentille (11) d'avant en arrière le long d'un axe optique de la lentille (11) ; et
le second élément mobile (14) est spécifiquement configuré pour faire tourner le composant de transmission de la lumière (13).

11. Module d'acquisition d'image (10) selon l'une quelconque des revendications 1 à 9, dans lequel : le composant de transmission de la lumière (13) comprend au moins un miroir.

12. Terminal, comprenant le module d'acquisition d'image (10) selon l'une quelconque des revendications 1 à 11.

10

Y

A

13

11

18

14

12

Z

B

X

FIG.1

10

12

11

13

14

18

X

14

14

12

FIG.2

FIG.3

FIG.4

N S

magnetic sensing
component

S

magnetic induction
strength

linear

magnet shift

N

FIG.5

D_OlSon

D_static

D_Olsoft

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013021485 A1
- WO 2020082411 A1
- EP 3674768 A1
- US 2019349523 A1